# EUROPEAN PATENT APPLICATION

(11) **EP 4 451 137 A1**
(43) Date of publication of application: **23.10.2024**
(21) Application number: 21968145.9
(22) Date of filing: 15.12.2021
(51) Int. Cl.: G06F 16/21

(54) **GENERATION METHOD, INFORMATION PROCESSING DEVICE, AND GENERATION PROGRAM**

(71) Applicant: FUJITSU LIMITED, Kawasaki-shi, Kanagawa 211-8588 (JP)
(72) Inventor: SHIMOYAMA, Ryota, Kawasaki-shi, Kanagawa 211-8588 (JP); MAEDA, Takuma, Kawasaki-shi, Kanagawa 211-8588 (JP); UMEDA, Naoki, Kawasaki-shi, Kanagawa 211-8588 (JP)
(74) Representative: Hoffmann Eitle
(86) International application number: PCT/JP2021/046381
(87) International publication number: WO 2023/112230

(57) **Abstract**

When detecting update of schema information on a database, an information processing device (1) generates a container image that includes the schema information after the update and a database management system that manages the database, and generates a new container that is the new container that includes the schema information after the update and in which the database management system is to be executed, at a timing of scale-out of a container, based on the generated container image. This may enable to speed up the startup of the database management system executed in the new container.

## Description

### TECHNICAL FIELD

The present invention relates to a generation method and the like.

### BACKGROUND ART

As a virtualization technology that is increasingly used mainly in a cloud platform, there is a container technology. The container technology is a technology that virtualizes an application execution environment on an operating system (OS) mounted on a server and can achieve high-speed startup and flexible scaling as compared with a server virtualization technology that virtualizes an execution environment including an OS.

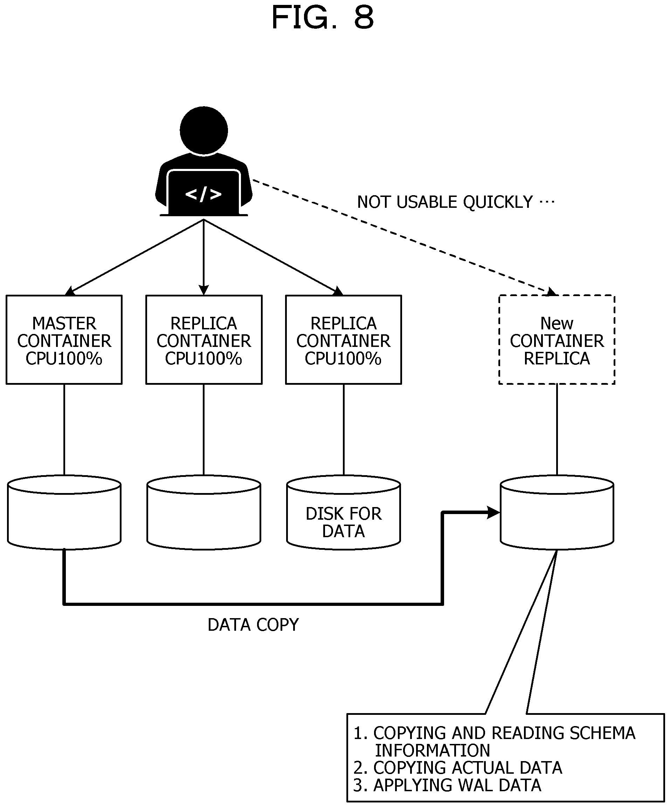

In recent years, the use of the container technology has also increased in applications that hold data, such as a database (DB). Examples of such applications include a database management system (DBMS) and an application that uses data. In the containerized database, data is updated using an external storage or the like in order to persist the data. FIG. 8 is a diagram illustrating a reference example of a first configuration of a containerized database. As illustrated in FIG. 8, the containerized database (container database) has a disk used to hold data in an external storage.

Then, in scale-out of the container database, the following processing is executed. Note that the scale-out means to increase the number of servers constituting a system, that is, the number of containers here. First, copying schema information and reading the schema information into a new container are executed. Second, copying actual data is executed. Third, applying write ahead logging (WAL) data that is a transaction log is executed.

Therefore, in the scale-out of the container database, it is difficult to achieve high-speed startup of a new container database because the first processing, second processing, and third processing are executed. Even in the container database, high-speed startup and flexible scaling are desired as in a container application that does not hold a DB.

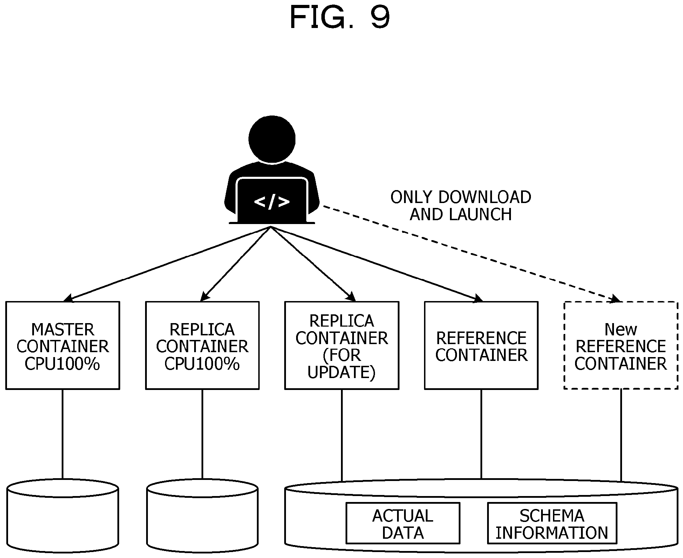

Thus, in order to avoid copying the schema information and the actual data, an approach using a shared disk is adopted. FIG. 9 is a diagram illustrating a reference example of a second configuration of a containerized database. As illustrated in FIG. 9, the container database has a disk used to hold data in a shared manner.

By using the shared disk, in the scale-out of the container database, the time taken to copy the schema information, copy the actual data, and apply the WAL data becomes zero. That is, copying of the schema information in the first processing, and the second processing and third processing are suppressed. Therefore, the second configuration can achieve high-speed startup of a new container database as compared with the first configuration.

### CITATION LIST

### PATENT DOCUMENT

Patent Document 1: International Publication Pamphlet No. WO 2005/029332

### SUMMARY OF INVENTION

### TECHNICAL PROBLEM

However, even in the second configuration, there is a disadvantage that it is difficult to speed up the startup of a new container database. That is, even in the second configuration, in the scale-out of the container database, reading processing for the schema information into a new container in the first processing still remains. Since the input-output (IO) load between a plurality of containers rises due to employing the shared disk in the second configuration, when the schema information is read from the shared disk at the time of starting a new container database, the cost of the reading processing for the schema information becomes larger.

In one aspect, the present invention aims to speed up the startup of a DBMS executed in a new container.

### SOLUTION TO PROBLEM

In one form, in a generation method, a computer executes processing of: when detecting update of schema information on a database, generating a container image that includes the schema information after the update and a database management system that manages the database; and generating a new container that is the new container that includes the schema information after the update and in which the database management system is to be executed, at a timing of scale-out of a container, based on the generated container image.

### ADVANTAGEOUS EFFECTS OF INVENTION

According to one exemplary form, the startup of a DBMS executed in a new container may be speeded up.

### BRIEF DESCRIPTION OF DRAWINGS

FIG. 1 is a diagram illustrating an example of a flow of generation processing according to an embodiment.
FIG. 2 is a block diagram illustrating an example of a functional configuration of an information processing device according to the embodiment.
FIG. 3 is a diagram illustrating an example of a flow of image update processing according to the embodiment.
FIG. 4 is a diagram illustrating an example of a flow of container update processing and container generation processing according to the embodiment.
FIG. 5 is a diagram illustrating an example of a flowchart of the image update processing according to the embodiment.
FIG. 6 is a diagram illustrating an example of a flowchart of the container generation processing according to the embodiment.
FIG. 7 is a diagram illustrating an example of a computer that executes a generation program.
FIG. 8 is a diagram illustrating a reference example of a first configuration of a containerized database.
FIG. 9 is a diagram illustrating a reference example of a second configuration of a containerized database.

### DESCRIPTION OF EMBODIMENTS

Hereinafter, embodiments of a generation method, an information processing device, and a generation program disclosed in the present application will be described in detail with reference to the drawings. Note that the present invention is not limited by the embodiments.

### [Embodiments]

In an embodiment, scale-out in a case where an application holding a database is containerized will be described. Examples of the application mentioned here include a DBMS that holds and manages a database. The scale-out mentioned here refers to increasing the number of containers. Note that the containerization of the DBMS will be sometimes referred to as a container database in the embodiment.

First, conventionally, the following processing is executed in the scale-out of the container database. First, copying schema information and reading the schema information into a new container are executed. Second, copying actual data from a master container to the new container is executed. Third, applying write ahead logging (WAL) data that is a transaction log is executed. By using a shared disk, in the scale-out of the container database, the time taken to copy the schema information, copy the actual data, and apply the WAL data becomes zero. That is, copying of the schema information in the first processing, and the second processing and third processing are suppressed.

In the scale-out of the container database, even when a shared disk is used, processing of reading the schema information from the shared disk still remains. When the shared disk is used, the IO load between a plurality of containers rises. For this reason, when the schema information is read from the shared disk at the time of starting a new container database, the cost of the reading processing for the schema information becomes larger, and it will take time to start the new container database.

Thus, the embodiment will describe an information processing device that excludes the reading processing for the schema information by supplying a container image with the schema information to cope with a startup delay caused by the reading processing for the schema information, which occurs at the time of generating a new container database.

### [Flow of Generation Processing]

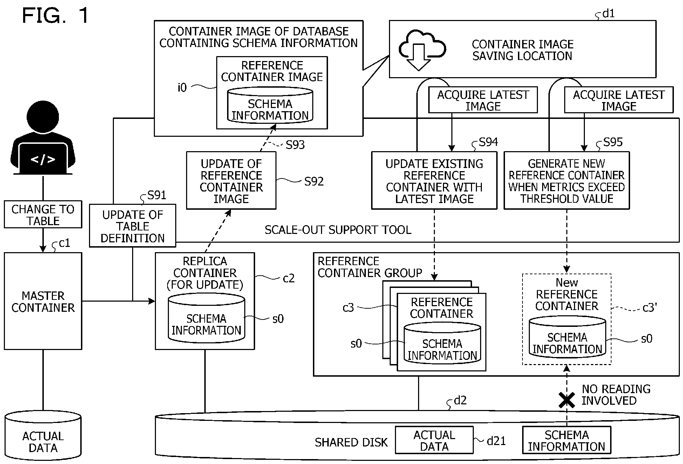

FIG. 1 is a diagram illustrating an example of a flow of generation processing according to the embodiment. In FIG. 1, a shared disk d2 holds actual data d21. Then, a master container c1, a replica container (for update) c2, and a reference container c3 exist in an operational environment for the containers. The master container c1 mentioned here refers to a container that manages the containers. The replica container (for update) c2 refers to a container used when schema information s0 is updated. The reference container c3 refers to a container used to refer to the schema information s0 that has been updated. The reference container c3 causes, for example, an application that accesses the actual data d21 held in the shared disk d2 to work. That is, the reference container c3 executes the DBMS and provides the application with access to the actual data d21 held in the shared disk d2. Note that, for example, it will be sufficient to apply Kubenetes or OpenShift as a tool for constructing and managing the operational environment for the containers.

The schema information s0 mentioned here includes a table definition that defines a relationship between pieces of data held in a table in the DB and information that defines how to physically arrange data held in the table defined by the table definition. The master container c1, the replica container (for update) c2, and the reference container c3 have to have the same schema information s0 in order to synchronize the schema information s0 in the respective containers. Note that the actual data d21 is data actually in the DB associated with the schema information s0.

Under such a situation, a user updates the table definition with respect to the master container c1. Then, the master container c1 causes the replica container (for update) c2 to reflect the update of the table definition (S91). The master container c1 updates the schema information s0 to update the table definition of the replica container (for update) c2.

When detecting the update of the table definition of the replica container (for update) c2, a scale-out support tool updates a reference container image 10, using the replica container (for update) c2 (S92). The reference container image i0 contains an image including the updated schema information s0 and the DBMS. Then, the scale-out support tool saves the reference container image i0 in a container image saving location d1 (S93).

Then, when the reference container image i0 is updated, the scale-out support tool acquires the latest reference container image i0 from the container image saving location d1. Then, the scale-out support tool updates the existing reference container c3 with the latest reference container image i0 (S94).

This may allow the scale-out support tool to update the schema information s0 in the existing reference container c3 at high speed. In other words, since the reference container c3 is updated with the latest reference container image i0, the updated schema information s0 does not have to be read from the shared disk d2, and the schema information s0 may be updated at high speed.

Then, the scale-out support tool monitors metrics of the existing reference container c3. The metrics mentioned here refer to, for example, central processing unit (CPU) usage, memory usage, the number of accesses to the DB, and network usage rate. Then, in a case where any of the metrics of the reference container c3 exceeds a preset threshold value, the scale-out support tool acquires the latest reference container image i0 from the container image saving location d1. Then, the scale-out support tool generates a new reference container c3', using the latest reference container image i0 (S95).

This may allow the scale-out support tool to launch the new reference container c3' at high speed because the latest reference container image i0 is used. That is, the scale-out support tool may start the DBMS of the new reference container c3' at high speed. In other words, by using the latest reference container image 10, the reference container c3' no longer has to read the updated schema information s0 from the shared disk d2, and disk IO attributable to the scale-out will be suppressed, such that the DBMS may be started at high speed.

### [Functional Configuration of Information Processing Device]

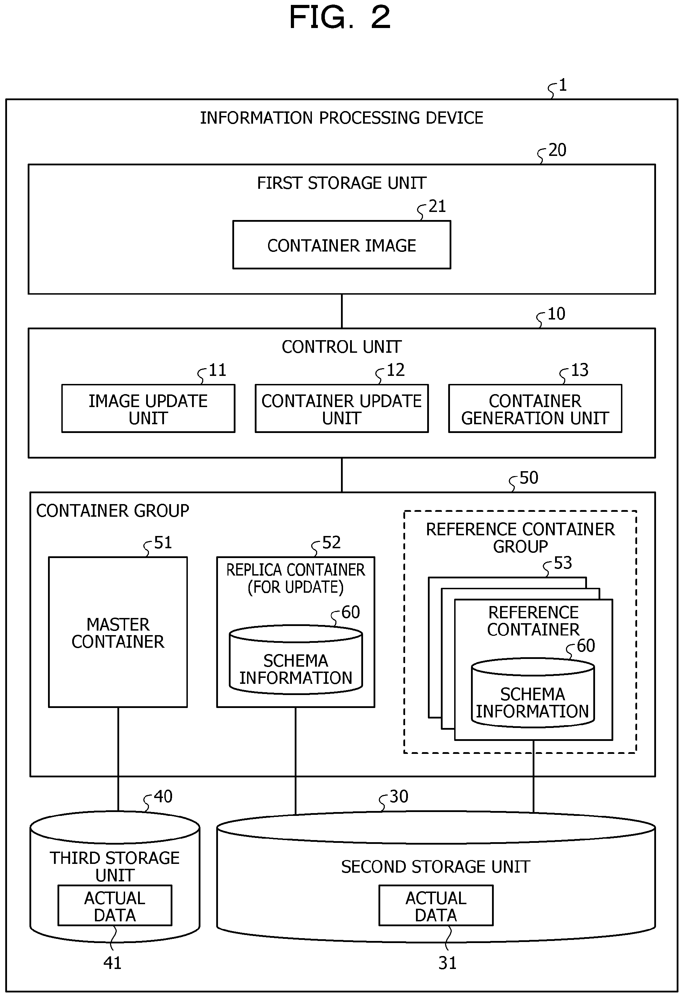

FIG. 2 is a block diagram illustrating an example of a functional configuration of the information processing device according to an embodiment. As illustrated in FIG. 2, the information processing device 1 includes a control unit 10, a first storage unit 20, a second storage unit 30, a third storage unit 40, and a container group 50. The container group 50 includes a master container 51, a replica container (for update) 52, and a reference container 53. The replica container (for update) 52 and the reference container 53 include schema information 60. The schema information 60 corresponds to s0 illustrated in FIG. 1. The master container 51 corresponds to c1 illustrated in FIG. 1. The replica container (for update) 52 corresponds to c2 illustrated in FIG. 1. The reference container 53 corresponds to c3 illustrated in FIG. 1.

The control unit 10 is a processing unit that takes control of the entire information processing device 1 and includes an image update unit 11, a container update unit 12, and a container generation unit 13. A storage unit (not illustrated) includes the first storage unit 20, the second storage unit 30, and the third storage unit 40.

The first storage unit 20 includes a container image 21. The container image 21 contains an image including at least the schema information 60 and the DBMS. Note that the container image 21 is generated or updated by the image update unit 11 to be described later. In addition, the first storage unit 20 corresponds to the container image saving location d1 illustrated in FIG. 1. Furthermore, the container image 21 corresponds to the reference container image i0 illustrated in FIG. 1.

The second storage unit 30 includes actual data 31. The actual data 31 is data actually in the DB associated with the schema information 60. Note that the second storage unit 30 corresponds to the shared disk d2 illustrated in FIG. 1. In addition, the actual data 31 corresponds to the actual data d21 illustrated in FIG. 1. The third storage unit 40 includes actual data 41 that is the same as the actual data 31.

The image update unit 11 updates the container image of the DBMS containing the schema information 60. For example, the image update unit 11 monitors update of the schema information 60 in the replica container (for update) 52. When detecting update of the schema information 60 in the replica container (for update) 52, the image update unit 11 acquires the container image 21 latest at that time point from the first storage unit 20 and launches the reference container 53, using the acquired container image 21. The image update unit 11 acquires the schema information 60 from the replica container (for update) 52 and copies the acquired schema information to the launched reference container 53. Then, the image update unit 11 images the reference container 53 that has been updated. The image update unit 11 then saves the imaged container image 21 in the first storage unit 20 as the latest container image 21.

The container update unit 12 updates the existing reference container 53 with the container image 21. For example, when the container image 21 is updated, the container update unit 12 acquires the latest container image 21 from the first storage unit 20. Then, the container update unit 12 replaces the image of the existing reference container 53 with the acquired latest container image 21.

This may allow the container update unit 12 to update the schema information 60 in the existing reference container 53 at high speed. In other words, since the reference container 53 is updated by the latest container image 21 without reading the updated schema information 60 from the second storage unit 30, the schema information 60 may be updated at high speed.

The container generation unit 13 generates a new container. That is, the container generation unit 13 executes container scale-out. For example, the container generation unit 13 monitors metrics of the existing reference container 53. In a case where any of the metrics of the reference container 53 exceeds a preset threshold value, the container generation unit 13 acquires the latest container image 21 from the first storage unit 20. Then, the container generation unit 13 generates the new reference container 53, using the latest container image 21. Note that it has been described that the container generation unit 13 generates the new reference container 53 at the timing when the metrics of the reference container 53 exceed a threshold value, but this is not restrictive, and the new reference container 53 may be generated at the timing when the user instructs to scale out.

This may allow the container generation unit 13 to launch the new reference container 53 at high speed by using the latest container image 21. That is, the container generation unit 13 may start the DBMS of the new reference container 53 at high speed. In other words, by using the latest container image 21, the reference container 53 no longer has to read the updated schema information 60, and disk IO attributable to the scale-out will be suppressed, such that the DBMS may be started at high speed.

### [Flow of Image Update Processing]

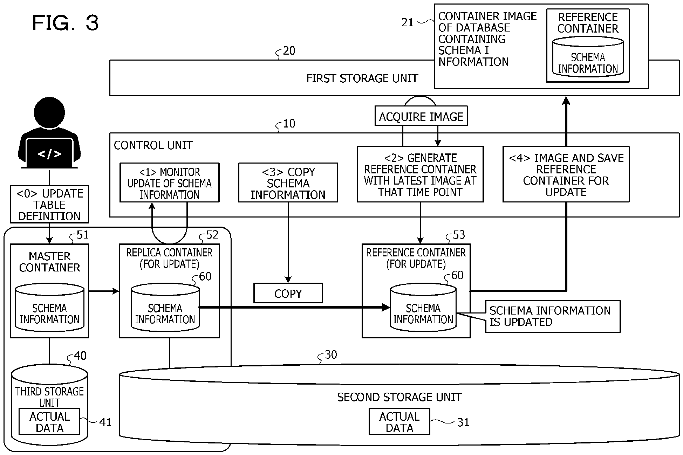

FIG. 3 is a diagram illustrating an example of a flow of image update processing according to the embodiment. First, the user updates the table definition of the master container 51 (<0>) . Then, the master container 51 causes the replica container (for update) 52 to reflect the update of the table definition by a DB standard function. The master container 51 updates the schema information 60 to update the table definition of the replica container (for update) 52.

Meanwhile, in the control unit 10, the image update unit 11 monitors update of the schema information 60 in the replica container (for update) 52 (<1>). When detecting update of the schema information 60 in the replica container (for update) 52, the image update unit 11 acquires the latest container image 21 at that time point from the first storage unit 20. The above container image 21 is a container image containing the latest schema information 60 at that time point. Then, the image update unit 11 generates the reference container 53 for update, using the acquired container image 21 (<2>).

Then, the image update unit 11 copies the schema information 60 to the reference container 53 for update from the replica container (for update) 52 (<3>) . This may allow the image update unit 11 to update the reference container 53 for update with the latest schema information 60.

Then, the image update unit 11 images the reference container 53 for update that has been updated and saves the imaged container image 21 in the first storage unit 20 as the latest container image 21 (<4>) . This may allow the image update unit 11 to hold the container image 21 of the reference container 53 containing the latest schema information 60.

### [Flow of Container Update Processing and Container Generation Processing]

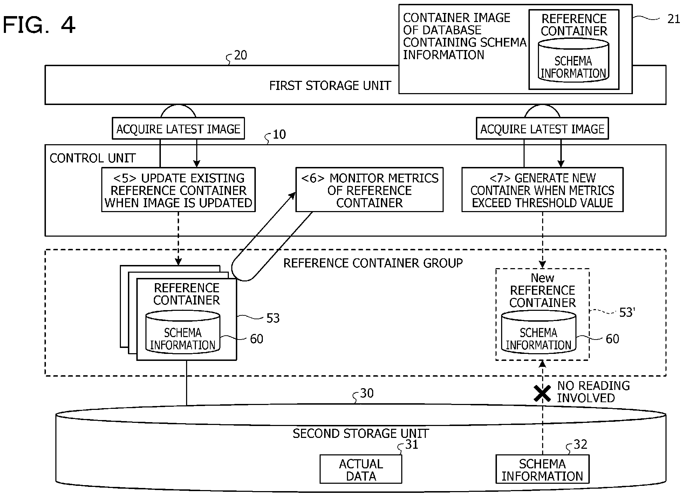

FIG. 4 is a diagram illustrating an example of a flow of container update processing and container generation processing according to the embodiment. As illustrated in FIG. 4, in the control unit 10, when the container image 21 is updated, the container update unit 12 acquires the latest container image 21 from the first storage unit 20. Then, the container update unit 12 updates the existing reference container 53 with the acquired container image 21 (<5>) . That is, the container update unit 12 replaces the image of the existing reference container 53 with the acquired latest container image 21. This may allow the container update unit 12 to update the schema information 60 in the existing reference container 53 at high speed.

In addition, in the control unit 10, the container generation unit 13 monitors metrics of the existing reference container 53 (<6>) . Then, when any of the metrics of the reference container 53 exceeds the threshold value, the container generation unit 13 acquires the latest container image 21 from the first storage unit 20. Then, the container generation unit 13 generates a new reference container 53', using the acquired container image 21. This may allow the container generation unit 13 to launch the new reference container 53' at high speed by using the container image 21. That is, the container generation unit 13 may start the DBMS of the new reference container 53' at high speed. In other words, by using the latest container image 21, the reference container 53' no longer has to read the updated schema information 60, and disk IO attributable to the scale-out will be suppressed, such that the DBMS may be started at high speed.

### [Flowchart of Image Update Processing]

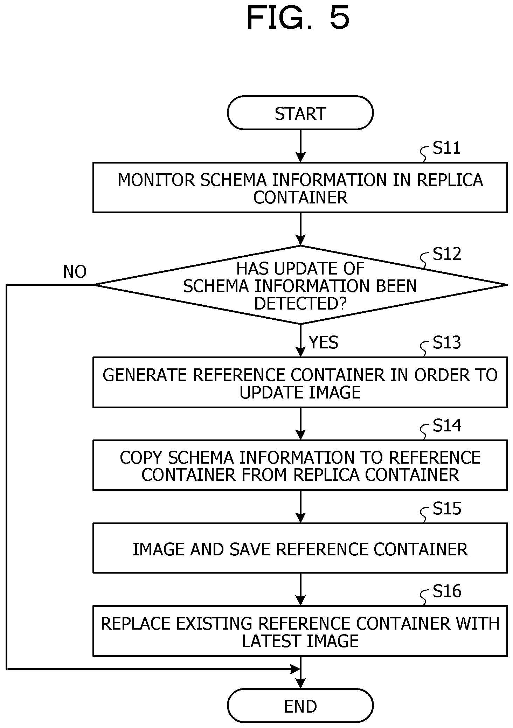

FIG. 5 is a diagram illustrating an example of a flowchart of the image update processing according to the embodiment. As illustrated in FIG. 5, the image update unit 11 monitors the schema information 60 in the replica container (for update) 52 (step S11). The image update unit 11 determines whether or not update of the schema information 60 has been detected (step S12) . In a case where it is determined that update of the schema information 60 has been detected (step S12; Yes), the image update unit 11 generates the reference container 53 for update in order to update the container image (step S13).

Then, the image update unit 11 copies the schema information 60 to the reference container 53 for update from the replica container (for update) 52 (step S14). Then, the image update unit 11 images the reference container 53 for update and saves the imaged container image 21 in the first storage unit 20 (step S15).

When detecting update of the container image 21, the container update unit 12 replaces the image of the existing reference container 53 with the latest container image 21 (step S16). Then, the container update unit 12 ends the container update processing.

In a case where it is determined in step S12 that update of the schema information 60 has not been detected (step S12; No), the image update unit 11 ends the image update processing.

### [Flowchart of Container Generation Processing]

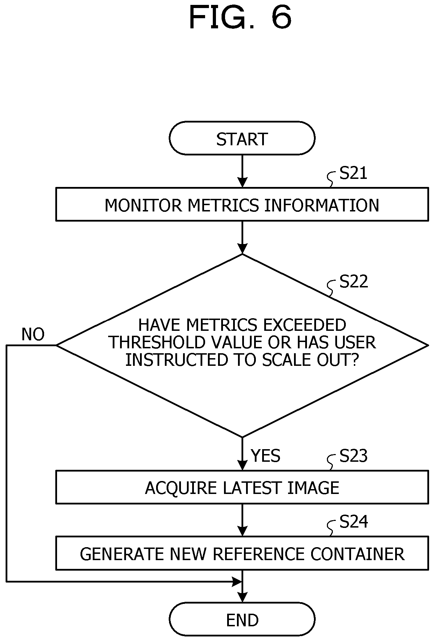

FIG. 6 is a diagram illustrating an example of a flowchart of the container generation processing according to the embodiment. As illustrated in FIG. 6, the container generation unit 13 monitors metrics information on the existing reference container 53 (step S21). The container generation unit 13 determines whether the metrics have exceeded a threshold value or the user has instructed to scale out (step S22). That is, the container generation unit 13 determines whether or not any of the metrics of the reference container 53 has exceeded the threshold value. Additionally, the container generation unit 13 determines whether or not the user has instructed to scale out.

In a case where it is determined that the metrics have exceeded a threshold value or the user has instructed to scale out (step S22; Yes), the container generation unit 13 acquires the latest container image 21 from the first storage unit 20 (step S23). Then, the container generation unit 13 generates the new reference container 53', using the acquired container image 21 (step S24). The container generation unit 13 then ends the container generation processing.

On the other hand, in a case where it is determined that the metrics have not exceeded a threshold value and the user has not instructed to scale out (step S22; No), the container generation unit 13 ends the container generation processing.

### [Effects of Embodiments]

According to the above embodiment, when detecting update of the schema information on a database, the information processing device 1 generates the container image 21 including the updated schema information 60 and the database management system that manages the database. Then, the information processing device 1 generates a new container that is a new container including the updated schema information 60 and in which the database management system is to be executed, at a timing of scale-out of a container, based on the generated container image 21. This may allow the information processing device 1 to launch a new container at high speed by generating a new container, using the container image 21 including the updated schema information 60. That is, the information processing device 1 may start the DBMS of the new container at high speed. In other words, since the information processing device 1 uses the container image 21 including the updated schema information 60, the information processing device 1 no longer has to read the updated schema information 60 from the shared disk, and disk IO attributable to the scale-out will be suppressed, such that the DBMS may be started at high speed.

In addition, according to the above embodiment, the information processing device 1 generates the container, using the latest container image at the time point of detecting update of the schema information 60. Then, the information processing device 1 copies the updated schema information 60 to the generated container. The information processing device 1 then generates the container image 21 obtained by imaging the container to which the updated schema information 60 has been copied. This may allow the information processing device 1 to reflect the updated schema information 60 to the already existing container and the new container at high speed by generating the container image 21 including the updated schema information 60.

In addition, according to the above embodiment, the information processing device 1 updates the already existing container, using the generated container image 21 at a timing when the container image 21 including the updated schema information 60 is generated. This may allow the information processing device 1 to update the schema information 60 in the already existing container at high speed by using the container image 21.

In addition, according to the above embodiment, the information processing device 1 generates a new container at a timing when the metrics of the already existing container exceed a specified value. This allows the information processing device 1 to generate a new container containing the updated schema information 60 at high speed by using the container image 21 in a case where the metrics of the already existing container exceed the specified value.

In addition, according to the above embodiment, the information processing device 1 generates a new container at a timing when an instruction to scale out the container is accepted. This may allow the information processing device 1 to generate a new container containing the updated schema information 60 at high speed by using the container image 21 in a case where the instruction to scale out the container is accepted.

### [Others]

Note that, in the above embodiment, a case where the information processing device 1 mounts the master container 51, the replica container (for update) 52, and the reference container 53 has been described, but this is not restrictive. That is, a plurality of servers may separately mount one or a plurality of containers for each server, and one server of the plurality of servers may have the function of the control unit 10.

In addition, in the above embodiment, each component of the information processing device 1 does not necessarily have to be physically configured as illustrated in the drawings. That is, specific forms of distribution and integration of the information processing device 1 are not limited to the illustrated ones, and the whole or a part of the information processing device 1 can be configured by being functionally or physically distributed and integrated in any units according to various loads, use states, or the like. For example, the image update unit 11 may be distributed to a monitoring unit that monitors update of the schema information 60 and an update unit that updates the container image to the latest container image when detecting update of the schema information 60. Furthermore, the container update unit 12 and the container generation unit 13 may be integrated as one unit. In addition, the first storage unit 20, the second storage unit 30, and the third storage unit 40 may be coupled through a network as external devices of the information processing device 1.

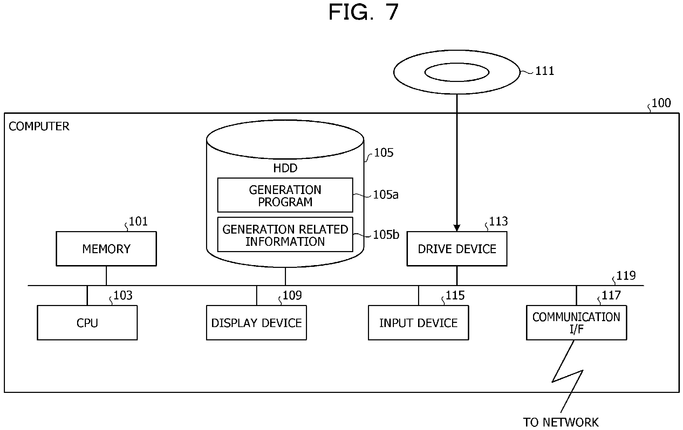

Furthermore, various types of processing described in the above embodiments can be implemented by a computer such as a personal computer or a workstation executing programs prepared in advance. Thus, in the following, an example of a computer that executes a generation program implementing functions similar to the functions of the information processing device 1 illustrated in FIG. 2 will be described. FIG. 7 is a diagram illustrating an example of a computer that executes the generation program.

As illustrated in FIG. 7, a computer 100 includes a CPU 103 that executes various types of arithmetic processing, an input device 115 that accepts data input from the user, and a display device 109. In addition, the computer 100 includes a drive device 113 that reads a program and the like from a storage medium, and a communication interface (I/F) 117 that exchanges data with another computer via a network. Furthermore, the computer 100 includes a memory 101 that temporarily stores various types of information, and a hard disk drive (HDD) 105. Then, the memory 101, the CPU 103, the HDD 105, the display device 109, the drive device 113, the input device 115, and the communication I/F 117 are coupled by a bus 119.

The drive device 113 is, for example, a device for a removable disk 111. The HDD 105 stores a generation program 105a and generation related information 105b. The communication I/F 117 takes control of an interface between the network and the inside of the device and controls input and output of data from another computer. A modem, a local area network (LAN) adapter, or the like can be adopted as the communication I/F 117, for example.

The display device 109 is a display device that displays data such as a document, an image, or functional information, as well as a cursor, an icon, or a tool box. A liquid crystal display, an organic electroluminescence (EL) display, or the like can be adopted as the display device 109, for example.

The CPU 103 reads the generation program 105a to load the read generation program 105a into the memory 101 and executes the loaded generation program 105a as a process. Such a process corresponds to each functional unit of the information processing device 1. The generation related information 105b corresponds to information used to execute the generation program 105a, and the like. Then, for example, the removable disk 111 stores each piece of information such as the generation program 105a.

Note that the generation program 105a does not necessarily have to be previously stored in the HDD 105. For example, the program may be stored in a "portable physical medium" inserted in the computer 100, such as a flexible disk (FD), a compact disc read only memory (CD-ROM), a digital versatile disc (DVD) disk, a magneto-optical disk, or an integrated circuit (IC) card. Then, the computer 100 may read the generation program 105a from these media and execute the read generation program 105a.

### REFERENCE SIGNS LIST

- 1: Information processing device
- 10: Control unit
- 11: Image update unit
- 12: Container update unit
- 13: Container generation unit
- 20: First storage unit
- 21: Container image
- 30: Second storage unit
- 31: Actual data
- 40: Third storage unit
- 41: Actual data
- 50: Container group
- 51: Master container
- 52: Replica container (for update)
- 53: Reference container
- 60: Schema information

## Claims

1. A generation method comprising processing that is executed by a computer and includes:
when detecting update of schema information on a database, generating a container image that includes the schema information after the update and a database management system that manages the database; and
generating a new container that is the new container that includes the schema information after the update and in which the database management system is to be executed, at a timing of scale-out of a container, based on the generated container image.

2. The generation method according to claim 1, wherein
the generating the container image includes:
generating the container by using the container image that is latest at a time point when the update of the schema information is detected;
copying the schema information after the update to the generated container; and
generating the container image obtained by imaging the container to which the schema information after the update has been copied.

3. The generation method according to claim 1 or 2, wherein
an already existing container is updated by using the generated container image at the timing when the container image that includes the schema information after the update is generated.

4. The generation method according to claim 1, wherein
the generating the new container includes generating the new container at the timing when metrics of an already existing container exceeds a specified value.

5. The generation method according to claim 1, wherein
the generating the new container includes generating the new container at the timing when an instruction to scale out the container is accepted.

6. An information processing device comprising:
a first generation unit configured to generate, when detecting update of schema information on a database, a container image that includes the schema information after the update and a database management system that manages the database; and
a second generation unit configured to generate a new container that is the new container that includes the schema information after the update and in which the database management system is to be executed, at a timing of scale-out of a container, based on the generated container image.

7. A generation program causing a computer to execute a process of:
when detecting update of schema information on a database, generating a container image that includes the schema information after the update and a database management system that manages the database; and
generating a new container that is the new container that includes the schema information after the update and in which the database management system is to be executed, at a timing of scale-out of a container, based on the generated container image.
